# EUROPEAN PATENT APPLICATION

(11) **EP 1 798 581 A1**
(43) Date of publication of application: **20.06.2007**
(21) Application number: 05388110.8
(22) Date of filing: 16.12.2005
(51) Int. Cl.: G02B 6/02

(54) **Optical bandgap fibre with different cladding elements**

(71) Applicant: Danmarks Tekniske Universitet, 2800 kgs. Lyngby (DK)
(72) Inventor: Alkeskjold, Thomas Tanggaard, 4040 Jyllinge (DK)
(74) Representative: Jensen, Peter Kim

(57) **Abstract**

An optical fibre (101, 201) utilises a photonic bandgap effect for light propagation. The fibre has a longitudinal direction and a cross section perpendicular thereto. The optical fibre (101, 201) comprises a microstructure that comprises a core region (102, 202), a cladding region surrounding said core region (102, 202), and a number of axially oriented cladding elements (104, 204; 106, 206), such as longitudinal extending holes, located in the cladding region. The cladding elements (104, 204; 106, 206) comprise a number of first cladding elements (104, 204), each having a first cross-sectional dimension (d), such as a diameter, and at least one second cladding element (106, 206) having a second cross-sectional dimension (d'), said first (d) and said second (d') cross-sectional dimension being different.

## Description

The present invention relates to an optical fibre utilising a photonic bandgap effect for light propagation and having a longitudinal direction and a cross section perpendicular thereto, said optical fibre comprising a microstructure that comprises a core region, a cladding region surrounding said core region, and a number of axially oriented cladding elements, such as longitudinal extending holes, located in the cladding region. By a photonic bandgap fibre is meant that fibre in at least one cross section of the fibre exhibits a photonic bandgap effect.

Optical fibres with or without tunability are used in a wide range of technical areas, such as optical communication, sensor technologies, imaging, lithography, opto-medical systems, material processing and so forth.

It is desirable to be able to shape the spectral properties for the light propagation of such a fibre and if possible on a short time scale and for a number of different wavelengths. This applies both to continuous wave systems and pulsed wave systems.

For optical communication, for example, it is desirable to be able to send signals at a high bit rate over long distances. This requires short light pulses of high intensity and fibres with little or no pulse distortion due to for instance dispersion or non-linear effects. As communication over the years has developed towards higher bit rates, there is a continuous need for improving properties of fibres, such as being able to shape the transmission spectrum of the fibre and the signal pulses and preferably with tunability.

Within the last couple of years a new type of optical fibre has shown the ability to guide light in a core surrounded by microstructured elements, which are elongated in the longitudinal direction of the fibre. These fibres are amongst others known as photonic crystal fibres, photonic bandgap fibres and holey fibres.

Although existing photonic bandgap fibres and devices using such fibres have a number of advantageous properties, there is a continuous need for developing fibres with improved spectral transmission properties, preferably with tunability.

US 2005/0169590 discloses an optical fibre, which comprises a core region and a microstructured cladding region surrounding the core region. The cladding region includes a number of cladding elements or air holes, said cladding elements being arranged in a two-dimensional periodic manner or a Bragg-type of manner. At least a number of the cladding elements are filled in at least one longitudinally extending section of the optical fibre with a liquid crystal material. This section exhibits a photonic bandgap effect for at least one phase state of the liquid crystal. The optical properties of the crystal fibre can be changed by use of for instance heating means or electro-optical means. Thereby it is possible to change the spectral transmission bands of the optical fibre.

The purpose of the invention is to provide a new and improved fibre.

This is according to the invention achieved by said cladding elements comprising a number of first cladding elements, each having a first cross-sectional dimension, such as a diameter, and at least one second cladding element having a second cross-sectional dimension, said first and said second cross-sectional dimension being different. In general, the idea behind the invention is that the transmission spectrum of the optical fibre is shaped to the desired spectrum by varying the cross-sectional dimension of the individual cladding elements accordingly. The term bandgap fibre is in this document meant as a fibre, in which the cladding elements preferably along at least a part of said fibre is filled with or consist of material having a higher refractive index than that of the background cladding material.

According to a particular embodiment of the invention, only one of the cladding elements has a cross-sectional dimension being different from the rest of the cladding elements. Thereby a "defect" is introduced to one or more of the transmission bands of the fibre, and in effect a notch filter is obtained. This notch filter can be used to remove certain wavelengths from the transmitted light, such as for instance the pump signal in a communication system.

According to a preferred embodiment, said cladding elements are cross-sectionally arranged in a substantially ring shaped or substantially periodic pattern, such as a honeycomb, triangular or hexagonal structure. A substantially periodic pattern means that the centre of the cladding elements are positioned in a substantially repetitive pattern when translated in each of two different direction, which for instance can represent a unit cell defined by two non-parallel vectors in the cross-sectional plane. The cladding elements can also be positioned in a substantially Bragg-type of manner, which means that the cladding elements are positioned substantially in concentric rings or circles around the core region. It is preferred to have at least 3 concentric rings or honeycomb rings, and typically 5-7 rings, in order for the fibre to exhibit an adequate photonic bandgap effect. Preferably, the core region is provided by removing one or more of these cladding elements, the remainder of the cladding elements thereby constituting the surrounding cladding elements. The fibre can also contain more than one core region, such as two or three core regions.

In a preferred embodiment of the fibre according to the invention, a number of said first cladding elements and/or second cladding elements at least along a longitudinal part of said fibre are filled with or consist of a material being dependent on external influences, such as temperature, stress fields, electrical fields, magnetic fields or optical fields. Thereby it is possible to change the transmission spectrum of the optical fibre, making it tunable. It is also possible to design a self-compensating fibre, where the change in transmission spectrum accommodates for the changes of the surroundings, such as the ambient temperature.

According to an embodiment of the invention, said second cladding element is proximal to the core. The closer the introduced defect is to the core, the more prominent the effect of this defect will be.

According to a preferred embodiment of the invention, the fibre comprises three second cladding elements, said three second cladding elements being arranged rotation symmetrical about and preferably proximal to the core. Hereby it is achieved a more balanced defect, where double refraction is avoided. Other numbers of defects are also possible in order to obtain the desired effect, such as for instance two, four or six second cladding elements.

According to a particular embodiment of the invention, the second cross-sectional dimension is smaller than the first cross-sectional dimension. Hereby, the effective mode index of the cladding mode supported by the second cladding element is reduced, and a mode from the overlying band is forced into the bandgap, in which the core mode is present.

According to an alternative embodiment of the invention, the second cross-sectional dimension is larger than the first cross-sectional dimension. Hereby, the effective mode index of the cladding mode supported by the second cladding element is increased, and a mode from the underlying band is forced into the bandgap, in which the core mode is present.

According to a preferred embodiment of the invention, the fibre further comprises a modified cladding area surrounding said second cladding elements, the refractive index of said modified cladding area being lower than that of the cladding region. That is the refractive index of the modified area should be lower than that of the background cladding material of the cladding region. Hereby the bandwidth of the notch filter is decreased.

According to an alternative embodiment of the invention, the fibre comprises a modified cladding area surrounding said second cladding elements, the refractive index of said modified cladding area being higher than that of the cladding region. Hereby the bandwidth of the notch filter is increased.

One method of reducing the refractive index of the modified cladding area is to dope it with for instance Florine or Boron. One method of increasing the refractive index of the modified cladding area is dope it for instance with Germanium or Aluminium.

According to another preferred embodiment of the fibre, substantially all the cladding element arranged in the same ring have substantially the same cross-sectional dimension, and the cross-sectional dimension of the individual cladding elements is dependent on the distance between the particular ring and the core region. The cross-sectional dimension of the cladding elements can for instance be decreasing with the radial distance from the core region. Thereby it is possible to shape part of the transmission spectrum to for example a Gaussian shape. One or more of the rings can also contain one or more cladding elements having a cross-sectional dimension different from the rest of the cladding elements in the same ring. These introduced "defects" in the ring makes for example a Gaussian transmission spectrum combined with a notch filter possible.

According to a preferred embodiment, the core region and/or the cladding region is made from polymer, silica or another glass type. Thereby well-known optical fibre materials, for which production techniques exist, can be used.

According to an embodiment of the fibre, the core region and/or at least part of the cladding region comprises an active material, such as silica, doped with a rare earth element, preferably silica doped with Germanium, Fluorine, Erbium, Ytterbium, Neodymium, Holmium, Thulium, Samarium or combinations thereof.

According to an alternative embodiment of the fibre, the core region and/or at least part of the cladding region comprise a polymer, such as PMMA, doped with a dye or another gain material.

According to a preferred embodiment, said material exhibits anisotropic optical properties. Thereby it is possible to achieve different transmission spectrums and/or tunability for different modes or polarisations of the light propagating in the fibre.

According to a particularly preferred embodiment according to the invention, said material in the cladding elements is a liquid crystal material. This material is especially sensitive to external influences, particularly to opto-electrical or thermal influences, thereby making the optical fibre highly tunable.

The optical fibre preferably exhibits a photonic bandgap effect in said filled part for at least one phase state of the liquid crystal material. The liquid crystal may comprise a dopant material for modifying its optical properties. The doping materials can for instance be selected from a range of azobenzene or anthraquinone dyes, such at Disperse red 1, Disperse blue 1, Disperse orange or Methyl red from Sigma-Aldrich Co.

According to a preferred embodiment, the optical fibre further comprises means, such as thermal, electrical and/or optical means, for changing the optical properties or the state of the material filled or contained in said cladding elements. These means can be used to tune the transmission spectrum of the fibre.

In another embodiment of the invention, the fibre comprises at least two second cladding elements having different cross-sectional dimensions. Hereby it is possible to achieve a double notch filter, where two different optical modes couple to separate introduced defects. Of course, it is also possible to make combinations of modified cladding areas with different doping materials, thereby being able to control the bandwidths of the individual notch parts of the transmission spectrum.

In a preferred embodiment, the cross-sectional dimension of said cladding elements is in the range from 0.1 µm to 10 µm, such as from 1 µm to 5 µm.

In another preferred embodiment, the minimum centre-centre distance between said cladding elements is in the range from 1 µm to 20 µm, such as from 2 µm to 10 µm or from 3 µm to 7 µm.

Preferably, the ratio between the cross-sectional dimension of the first cladding elements and the cross-sectional dimension of the second cladding elements is in the interval from 0.3 to 3 and preferably in the interval from 0.6 to 1.5.

The fibre is especially applicable to light propagation of wavelengths between 300 nm and 3 µm, however, the invention is not restricted to these wavelengths.

The invention also relates to a fibre bundle comprising one or more of said optical fibres. The individual fibres in the fibre bundle can have different dimensions and different cladding materials.

The invention also relates to the use of said fibre as a notch filter. The fibre can also be used as a pump signal removing filter. Yet another use of the fibre relates to using it as a highly dispersive fibre for pulse compression or broadening.

The invention is explained in greater detail below with reference to the accompanying drawings, in which
Fig. 1 shows a schematic view of prior art photonic bandgap fibre,
Fig. 2 a schematic view of a part of the cross-section of a first embodiment of an optical fibre according to the invention,
Fig. 3 a schematic view of a part of the cross-section of a second embodiment of an optical fibre according to the invention,
Fig. 4 the relationship between the refractive index and the wavelength for different supported modes of the fibre,
Fig. 5 the field distribution in the cross section of a fibre according to the invention for different wavelengths,
Fig. 6 the transmission spectrum of a notch filter according to the invention,
Fig. 7 a schematic view of a part of the cross-section of a third embodiment of an optical fibre according to the invention,
Fig. 8 part of the transmission spectrum of the fibre according to the third embodiment,
Fig. 9 a schematic view of a part of the cross-section of a fourth embodiment of an optical fibre according to the invention, and
Fig. 10 part of the transmission spectrum of the fibre according to the fourth embodiment.

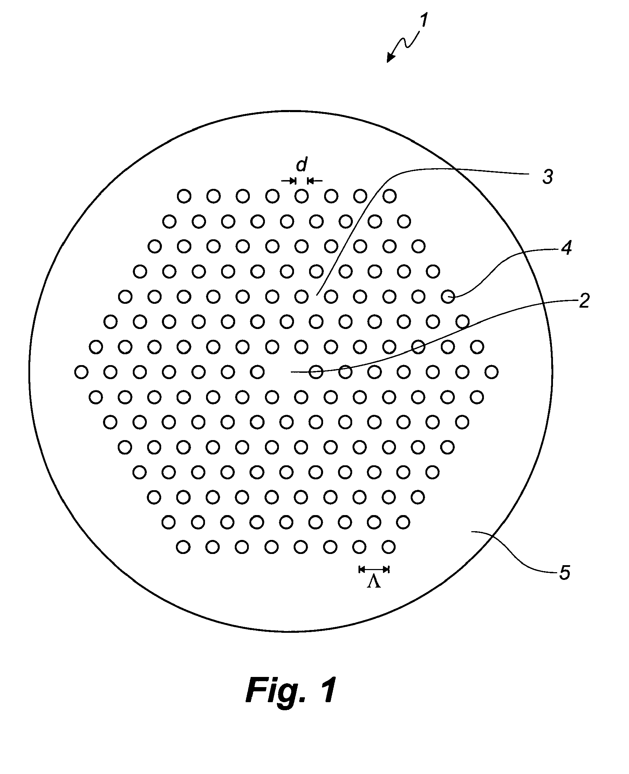

Fig. 1 schematically depicts the cross-section of a prior art optical fibre 1 of the photonic bandgap fibre type. The optical fibre 1 comprises a core region 2 and a micro-structured cladding region surrounding said core region 2. The micro-structured cladding region comprises a number of cladding elements 4, for instance in form of a number of axially or longitudinally extending holes. The cladding elements are here of equal dimension or diameter (d), but variations can occur due to production variations. The cladding elements 4 are placed in a background cladding material 3 and an over-cladding region 5. The cladding elements 4 surrounding the core region 2 are positioned in a two-dimensional periodic lattice or a so-called triangular structure, where the centre to centre distance between adjacent cladding elements (also called the pitch) is denoted A. The core region 2 is preferably made from the same or a similar material as the background cladding material 3, for instance by removing one or more of the cladding elements 4 in the centre of the cross-section of the fibre 1. The fibre 1 uses the photonic bandgap effect for light propagation in the core 2 of the fibre 1. This means that the fibre 1 can guide light with wavelengths within different bands, which among others are determined by the structure and material contents of the cladding elements 4. The refractive index of the material in said cladding elements 4 is higher than the refractive index of the background cladding material 3.

A configuration with a triangular pattern with seven "rings" as shown in Fig. 1 has shown a good photonic bandgap effect with a sharp bandgap edge. However, it is possible to design the fibre 1 with fewer or additional rings.

Such a fibre 1 has a transmission spectrum with a number of transmission bands with high transmission separated by bands with low or no transmission. Among others, the transmission spectrum is determined by material contained or filled in said cladding elements 4. This can for instance be a liquid crystal such as E7 liquid crystal from Merck, Darmstadt, Germany. This makes the transmission spectrum of the fibre 1 highly tunable by use of for instance thermal, optical or electrical means. The tunability is more thoroughly described in US 2005/0169590.

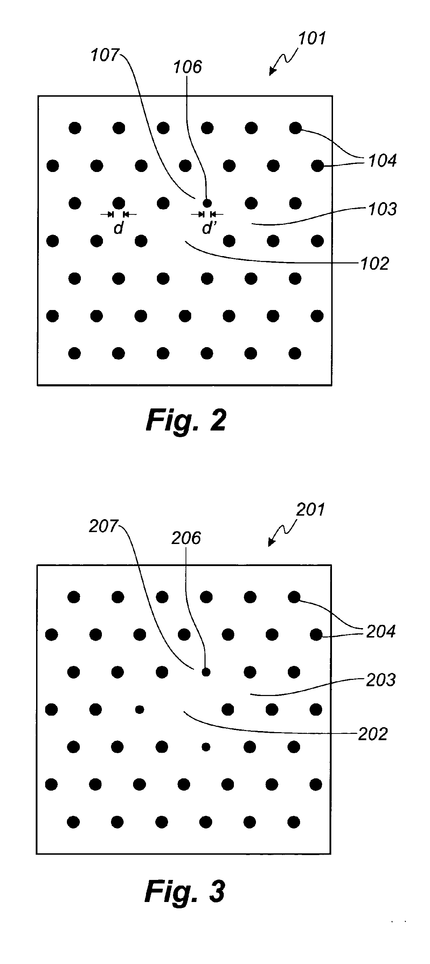

Fig. 2 shows a partial cut-away of the cross-section of a first embodiment of an optical fibre 101 according to the invention. The optical fibre 101 comprises a core region 102 and a micro-structured cladding region surrounding said core region 102. The micro-structured cladding region comprises a number of first cladding elements 104, for instance in form of a number of axially or longitudinally extending holes. The first cladding elements 104 have a first cross-sectional dimension (d). The optical fibre 101 additionally comprises a second cladding element 106 having a second cross-sectional dimension (d') being different from the first cross-sectional dimension (d). The first and the second cladding elements 104, 106 surrounding the core region 102 are positioned in a two-dimensional periodic lattice or a so-called triangular structure. The core region 102 is preferably made from the same or a similar material as the background cladding material 103, for instance by removing one or more of the cladding elements 104 in the centre of the cross-section of the fibre 101. The fibre 101 uses the photonic bandgap effect for light propagation in the core 102 of the fibre 101. The refractive index of the material in said cladding elements 104 is higher than the refractive index of the background cladding material 103.

The modification of the second cladding element 106 introduces a "defect" to the lattice structure and supports the propagation of an optical defect mode. When the modification as shown in Fig. 2 is applied to one of the cladding elements in the innermost ring, this is in the following denoted as a pseudo-surface mode. Optical modes that exist on the boundary between the core region and the cladding region of photonic bandgap fibres are often called surface modes and are typically unwanted, since they induce undesired contributions to dispersion and give rise to losses, which are highly wavelength dependent. In the following, these modes are denoted pseudo-surface modes, since the defects in the present application are introduced deliberately in order to induce such surface modes, i.e. modes supported on the boundary between the core region 102 and the cladding region.

Additionally, the fibre 101 comprises a modified cladding area 107 surrounding the second cladding element 106. The modified cladding area 107 has a refractive index being different from the refractive index of the background cladding material 103. If the fibre is made from silica, the modified cladding area 106 can be doped with for instance Fluorine or Boron, thereby lowering the refractive index of the modified cladding area 107 with for instance a value of 0.01-0.02. Alternative, the refractive index of the modified cladding area can be increased by doping the area with Germanium or Aluminium. The doping of the modified cladding area 107 can make the effect of the pseudo-surface modes more or less pronounced.

The cladding elements 104, 106 or holes are at least along a part of said fibre 101 filled with a high refractive index fluid having a refractive index being higher than that of the background cladding material 103. The fluid can for instance be oil, a polymer, a liquid crystal or another liquid. Preferably, the fluid has optical properties that are highly dependent on temperature variations or opto-electrical effects, for which reason liquid crystal materials are preferred. The liquid crystal material can be in an isotropic phase or exhibit a specific mesophase, such as nematic, smectic and/or cholesteric. The holes 104 of the fibre 101 can be filled with liquid by for instance use of capillary effects, pressure, vacuum or other means. The transmission spectrum of the fibre 101 can then be tuned by changing the optical properties of the liquid crystal. This can for instance be done by controlling the temperature of the fibre 101, thereby changing the refractive index of the liquid crystal. The thermal tuning can for instance be carried out by applying using a resistive microheater and a thin conductive layer applied to at least a part of the surface of the fibre 101. By subjecting this layer to a voltage difference over at least a part of its physical extension, it is possible to control the temperature of the fibre 101. The transmission spectrum can also be tuned by using electrical or optical fields. By use of electrical fields, it is for instance possible to achieve a polarisation dependent transmission spectrum.

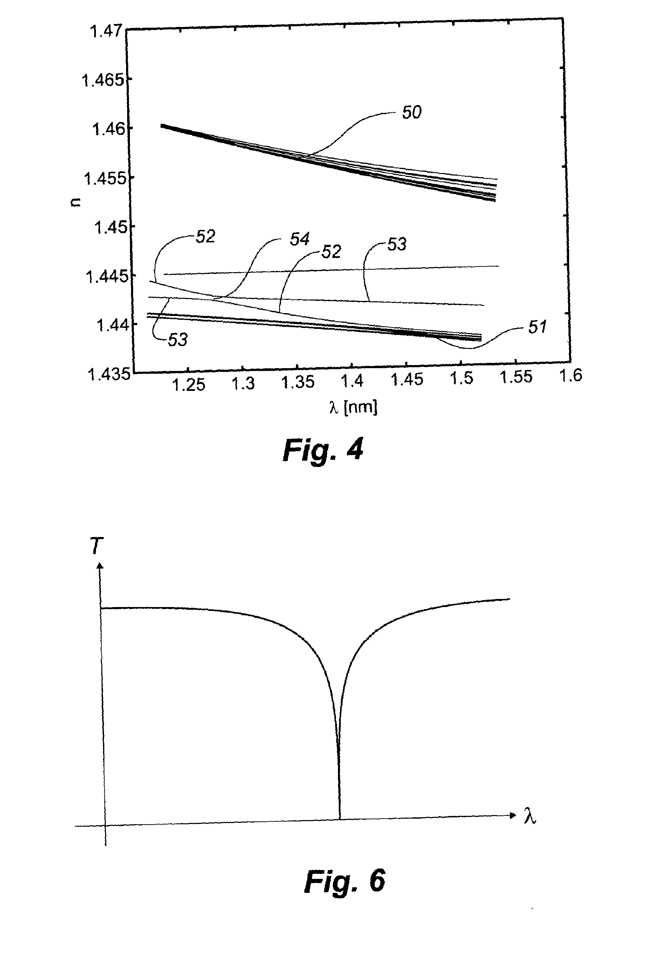

Fig. 4 shows the relationship between the refractive index and the wavelength for sixty different supported modes for a fibre 101 as shown in Fig. 2. The holes 104, 106 are filled with a E7 liquid crystal from Merck, Darmstadt, Germany and the refractive index of the fibre 101 is 1.445. The liquid crystals are oriented so that the refractive index in the transverse plane of the fibre 101 is 1.5025 and 1.67 in the longitudinal direction of the fibre 101. The first cladding elements 104 have a diameter d=1.5 µm and the second cladding element have a diameter d'=1.2 µm. The centre to centre distance between the cladding elements 104, 106 is 6.0 µm. The radius of the modified cladding area 106 is 3.0 µm and the refractive index of the modified cladding area is 1.43.

The fibre 101 supports optical modes, which are divided into different discrete bands, of which two discrete bands 50, 51 are depicted in Fig. 4. The depicted modes are so-called LP01 cladding modes 50 and LP11 cladding modes 51. Between these bands 50, 51 a photonic bandgap can occur, where an optical mode can be contained in the core region 102, even though this mode has a lower effective index than that of the cladding. This is not possible in fibres that are based on total internal reflection.

By increasing or decreasing the diameter of one or several of the holes 106 around the core region 102, the effective index for the mode supported by the modified hole(s) 106 is increased or decreased, respectively. Thereby, it is possible to force a mode 52 from the overlying or underlying band into the bandgap, where the core mode is maintained. This mode 52 is called a pseudo-surface mode (or LP01 pseudo mode 52) and this mode can start to couple to a core mode 53, when the difference in effective index between the two modes becomes small. Since the two modes cannot have the same effective index for the same wavelength due to so-called "avoided crossing" 54, the two modes will deflect each other. In the area around the avoided crossing 54, the core mode 53 has a high dispersion due to the deflection with the pseudo-surface mode 52. Additionally, a high loss will be present in this spectral area, which yields a significant drop in transmission, and the fibre 101 can thus function as a notch filter with a transmission spectrum as shown in Fig. 6. For some applications, it is preferred that the spectral coupling area is very narrow, for instance if the fibre 101 is to be used as a notch filter. This can be achieved by doping the modified cladding area 107 with a material that lowers the refractive index. Hereby it is obtained that the "avoided crossing" occurs over a spectrally narrow area, at the same time achieving a high dispersion.

Since the effective index of the pseudo-surface mode is dependent on the refractive index of the liquid crystal, the area with the avoided crossing can be tuned by varying the refractive index of the liquid. The fibre 101 can thereby used as a tunable dispersion compensator or a tunable notch filter.

Fig. 5a-d shows a simulation of the electrical field distribution for the core mode 53 at different wavelengths λ around the area of avoided crossing 54. Fig. 5a shows the field distribution for λ = 1.34 µm, Fig. 5b the field distribution for λ = 1.318 µm, Fig. 5c the field distribution for λ = 1.295 µm, and Fig. 5d the field distribution for λ = 1.274 µm. It is seen that the field distribution is changed significantly for the different wavelength to the point shown in Fig. 5d, where substantially no light is propagating in the core region 106. This wavelength corresponds to the central part of the area of avoided crossing 54 or the centre frequency of the notch filter shown in Fig. 6.

Other surface modes and bandgaps can with advantage be used. In general the pseudo-surface mode 52 is supported by one or more introduced defects by modifying the hole size and/or refractive index. These defects are preferably placed proximal to the core in order for the corresponding effect to be maximised. However, this not a requirement and the defects can be introduced to other holes or cladding elements of the fibre. The pseudo-surface mode 52 can be positioned in an arbitrary bandgap generated by two bands of cladding modes. Therefore, these bandgaps are not restricted to the LP01 and LP11 cladding states or modes, but can be related to an arbitrary cladding state.

Fig. 3 shows a second embodiment of a fibre 201 according to the invention. This fibre 201 corresponds to the fibre 101 shown in Fig. 2 with the difference that it has three second cladding elements 206 proximal to the core region 202. This provides a configuration, where the modified holes 206 are placed in a threefold rotation symmetrical and balanced configuration. By using this configuration, double refraction can be avoided, which can occur for the configuration shown in Fig. 2, and which can be undesirable for some applications.

The fibre 201 is shown with three substantially identical second cladding elements 206 or holes, each with a surrounding modified cladding area 207. Thereby a transmission spectrum corresponding to the notch filter shown in Fig. 6 for the fibre 101 shown in Fig. 2 is obtained. By thermal or opto-electrical tuning of the liquid crystal in the cladding elements 204, 206, the centre frequency of the notch filter can be controlled. The width of the notch filter can be made narrower by doping the modified cladding areas 207 with a material that lowers the refractive index of the background cladding material 203 and be increased by doping the modified cladding areas 207 with a material that increases the refractive index.

However, the second cladding elements 206 can also have varying hole sizes, some being smaller than the first cladding elements 204 and some being larger than the first cladding elements 204. Thereby it is possible to achieve a double or multiple notch filter, where two or more different optical modes couple to separate introduced defects.

The fibres 101, 201 are especially applicable for dispersion trimming of the pulse broadening in for instance high bit rate optical communication systems and for use as a tunable notch filter for removing undesired spectrally narrow light sources in a broad spectrum. The latter application can for instance be of interest in order to remove the pump signal in systems that use non-linear effect for optical signal processing, such as for instance four wave mixing.

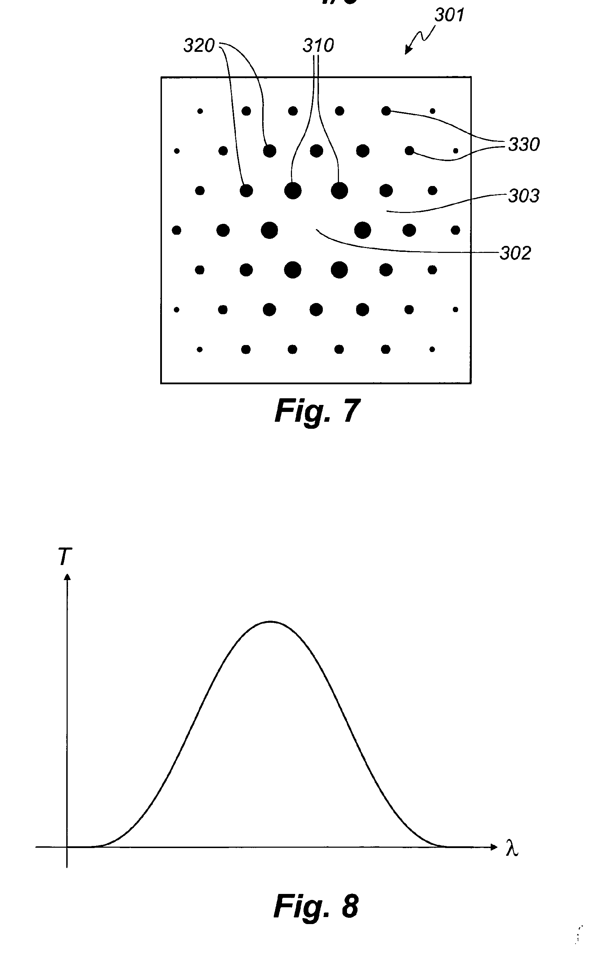

In general, the idea behind varying the sizes of the holes throughout the cross section of the fibre is to shape the transmission spectrum of the fibre. The fibre 301 shown in Fig. 7 exemplifies this idea. This fibre 301 comprises a core region 302, which is surrounded by a number of cladding elements positioned in a background cladding material 303, such as silica. The cladding elements are arranged in a triangular pattern with a number of "rings" surrounding the core region 302. A number of first cladding elements 310 are positioned in the innermost ring, a number of second cladding elements 320 are positioned in the next ring, a number of third cladding elements 330 in a third ring and so forth. The cross-sectional dimension of the first cladding elements 310 is larger than the cross-sectional dimension of the second cladding elements 320, which in turn is larger than the cross-sectional dimension of the third cladding elements 330. Thus, the cross-sectional dimension of the cladding elements is decreasing with increasing distance from the core region 302. By use of this configuration, it is possible to shape the transmission spectrum of the fibre 301 to for example a Gaussian shape as shown in Fig. 8, which is useful for many applications such as in low coherence interferometry systems or optical coherence tomography systems.

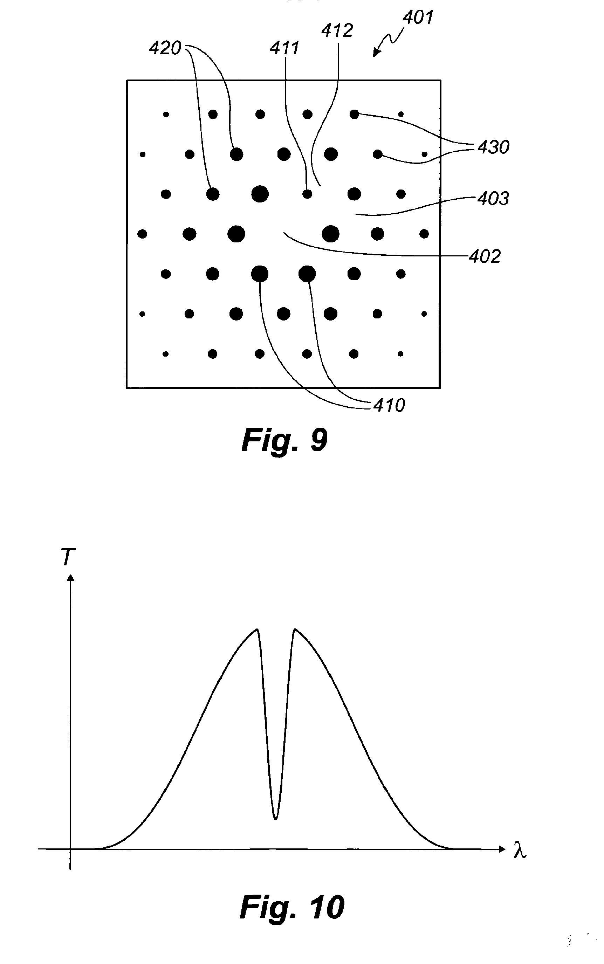

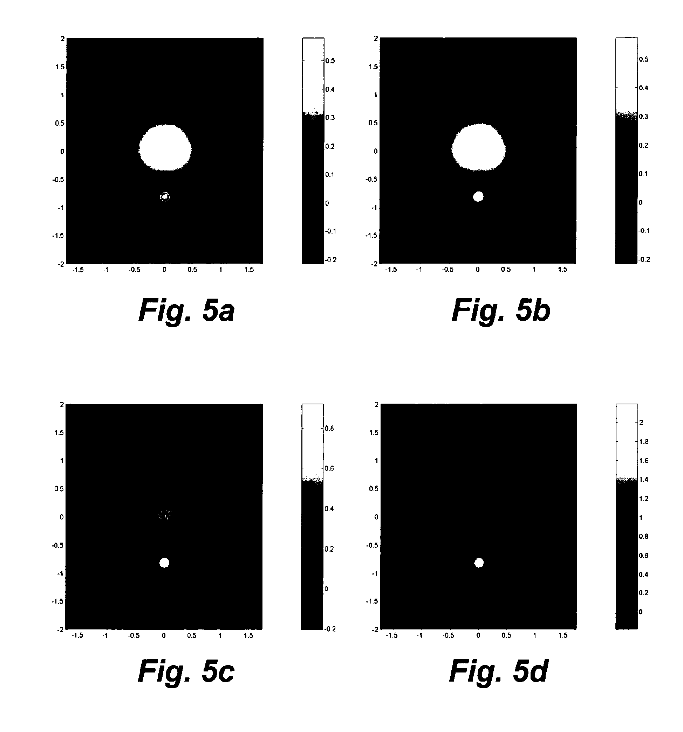

Fig. 9 shows a fibre 401, which comprises a core region 402, which is surrounded by a number of cladding elements positioned in a background cladding material 403, such as silica. The cladding elements are arranged in a triangular pattern with a number of "rings" surrounding the core region 402. A number of first cladding elements 410 are positioned in the innermost ring, a number of second cladding elements 420 are positioned in the next ring, a number of third cladding elements 430 in a third ring and so forth. The cross-sectional dimension of the first cladding elements 410 is larger than the cross-sectional dimension of the second cladding elements 420, which in turn is larger than the cross-sectional dimension of the third cladding elements 430. Thus, the cross-sectional dimension of the cladding elements is decreasing with increasing distance from the core region 402. The fibre 401 thus corresponds to the fibre 301 shown in Fig. 7 with the exception that a defect is introduced proximal to the core by changing the cross-sectional dimension of a cladding element 411 so that it differs from the rest of the cladding elements 410 in the same ring. Thereby, it is possible to obtain for example a Gaussian transmission band combined with a notch filter as shown in Fig. 10. Once again, it is noted that the refractive index of the cladding elements is higher than the refractive index of the background cladding material.

The invention has been described with reference to preferred embodiments. However, the scope of the invention is not limited to the illustrated embodiment, and alterations and modifications can be carried out without deviating from said scope of the invention.

## Claims

1. An optical fibre (101, 201) utilising a photonic bandgap effect for light propagation and having a longitudinal direction and a cross section perpendicular thereto, said optical fibre (101, 201) comprising a microstructure that comprises
- a core region (102, 202),
- a cladding region, surrounding said core region (102, 202), and
- a number of axially oriented cladding elements (104, 204; 106, 206), such as longitudinal extending holes, located in the cladding region,
wherein
said cladding elements (104, 204; 106, 206) comprise a number of first cladding elements (104, 204), each having a first cross-sectional dimension (d), such as a diameter, and at least one second cladding element (106, 206) having a second cross-sectional dimension (d'), said first (d) and said second (d') cross-sectional dimension being different.

2. Optical fibre (101, 201) according to claim 1, wherein said cladding elements (104, 204; 106, 206) are cross-sectionally arranged in a substantially ring shaped or substantially periodic pattern, such as a honeycomb, triangular or hexagonal structure.

3. Optical fibre (101, 201) according to claim 1 or 2, wherein said second cladding (106, 206) element is proximal to the core region (102, 202).

4. Optical fibre (101, 201) according to any of the preceding claims, comprising three second cladding elements (106, 206), said three second cladding elements (106, 206) being arranged rotation symmetrical about and preferably proximal to the core region (102, 202).

5. Optical fibre (101, 201) according to any of the preceding claims, wherein the second cross-sectional dimension (d') is smaller than the first cross-sectional dimension (d).

6. Optical fibre (101, 201) according to any of claims 1-4, wherein the second cross-sectional dimension (d') is larger than the first cross-sectional dimension (d).

7. Optical fibre (101, 201) according to any of the preceding claims, further comprising a modified cladding area (107, 207) surrounding said second cladding elements (106, 206), the refractive index of said modified cladding area (107, 207) being lower than that of the cladding region.

8. Optical fibre (101, 201) according to any of claims 1-6, further comprising a modified cladding area (107, 207) surrounding said second cladding elements (106, 206), the refractive index of said modified cladding area (107, 207) being higher than that of the cladding region.

9. Optical fibre (301, 401) according to claim 2, wherein the substantially all the cladding elements (310, 410; 320, 420; 330, 430) arranged in the same ring are of substantially the same cross-sectional dimension (d), and that the cross-sectional dimension (d) of the individual cladding elements is dependent on the distance between the particular ring and the core region.

10. Optical fibre (101, 201, 301, 401) according to any of the preceding claims,
wherein a number of said first cladding elements (104, 204) and/or second cladding elements (106, 206) at least along a longitudinal part of said fibre are filled with or consist of a material being dependent on external influences, such as temperature, stress fields, electrical fields, magnetic fields or optical fields.

11. Optical fibre according to claim 10, wherein said material exhibits anisotropic optical properties.

12. Optical fibre according to claims 10 or 11, wherein said material in the cladding elements is a liquid crystal material.

13. Optical fibre according to any of the preceding claims, comprising at least two second cladding elements (106, 206) having different cross-sectional dimensions (d', d").

14. Optical fibre according to any of the preceding claims, wherein the ratio between the cross-sectional dimension (d) of the first cladding elements (104, 204) and the cross-sectional dimension (d', d") of the second cladding elements (106, 206) is in the interval 0.3-3 and preferably in the interval 0.6-1.5.
